# EUROPEAN PATENT APPLICATION

(11) **EP 1 742 224 A2**
(43) Date of publication of application: **10.01.2007**
(21) Application number: 05256455.6
(22) Date of filing: 18.10.2005
(51) Int. Cl.: G11B 33/12

(54) **Portable DVD player with built-in battery**

(30) Priority: 06.07.2005 CN 200520060764
(71) Applicant: Silicon Pyramid Electron Ltd., Guangzhou (CN)
(72) Inventor: Hsiung, Chen Kuo, Guangzhou (CN)
(74) Representative: Piésold, Alexander James

(57) **Abstract**

A portable DVD player is provided with a built-in battery located in compartments disposed on opposite sides of the axle (4) on which the DVD is located. The compartments contain the batteries and the closures (5) for the compartments and are secured to the main body (1) to positively locate the batteries in position.

## Description

The invention relates to a DVD player, particularly, a Portable DVD player with a built-in battery.

Existing portable DVD players are available in various structures, usually powered in two ways, including AC converted to DC supply or a battery arrangement. Usually, the battery is a specially designed lithium battery or lithium-ion battery, which is costly, uncommon and apt to pollute. Commonly used batteries, including AA or AAA batteries or rechargeable batteries, are inexpensive, widely available, and environmentally friendly, but portable DVD players using such batteries are not yet available on the market. Similar electronic products on the market using such batteries are portable CD players. Typically, a portable CD player has a battery compartment located in the bottom thereof and sealed with a closure. Such a design makes battery replacement easy but has a number of drawbacks. The compartment closure may become loose (e.g., due to accidental collision or being dropped) and the battery may come out or the closure may easily get damaged and fail to seal the compartment thus creating problems.

At least in its preferred embodiments the invention provides a portable DVD player with a built-in battery system that uses common batteries. The system should preferably be rationally structured, reliable, not apt to leakage, and free from the present technical defects.

Viewed from one aspect, the invention provides a portable DVD player with a built-in battery comprising a main body, a cover for said main body, at least one battery compartment defined by said main body and a closure for said compartment.

The compartment closure is preferably hinged or wedged at one end to the compartment opening, and wedged at the other end to the compartment opening through a spring card.

There may be 2 to 4 compartments set respectively around the rotating axle inside the main body. Each compartment may hold 2-4 AA or AAA cells or rechargeable cells.

After a compartment closure is fixed over its respective compartment opening, the upper side of the compartment closure should preferably be at the same level or a little lower than the upper side of the main body. This arrangement does not interfere with the normal use of disks.

This invention provides an improvement over the existing technologies in a number of respects:
(1) The Portable DVD player can use widely available and environmentally friendly AA or AAA batteries or rechargeable batteries instead of the costly and uncommon lithium battery or lithium-ion battery. This prevents a situation in which the DVD player cannot be used normally when the battery is used up and not rechargeable.
(2) The portable DVD player is designed with a built-in battery which is less likely to drop out due to accidental collision or fall. The novel design also helps protect the compartment closure from damage or from becoming loose.

A preferred embodiment will now be described, by way of example only, with reference to the accompanying drawings, in which:
Figure 1 shows a perspective view of a portable DVD player according to the invention;
Figure 2 shows the DVD player of Fig. 1 in the open position with the battery compartments open; and
Figure 3 shows the DVD player of Fig. 1 in the open position ready to receive a disk with the battery compartments closed.

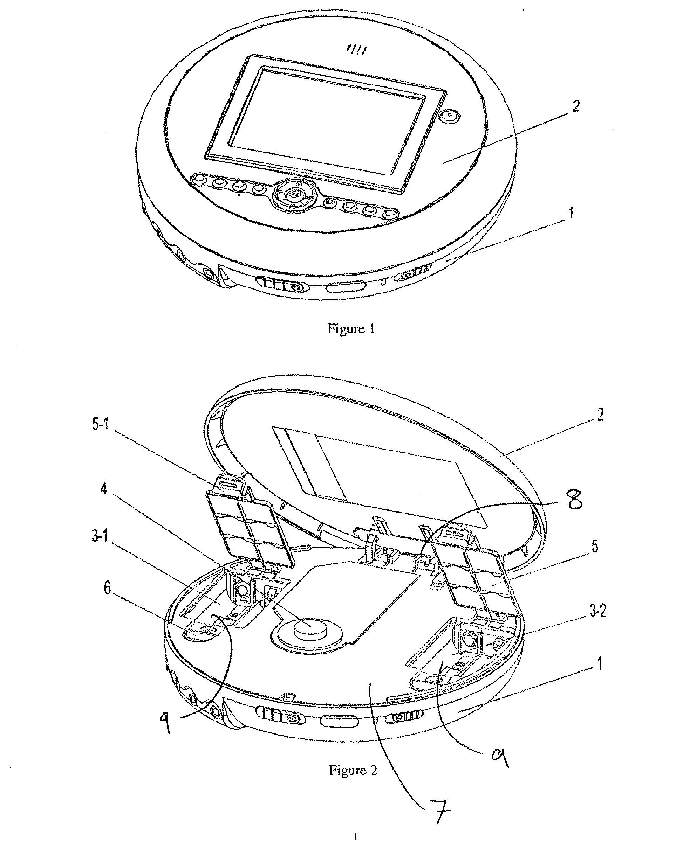

Figures 1-3 show a portable DVD player according to the invention. As shown in Figure 1, the portable DVD player with built-in battery consists of a main body 1 and a cover 2, which are hingedly connected by a hinge 8, as shown in Figure 2, allowing the cover 2 to move relative to the main body between an open position, as shown in Figure 2, and a closed position, as shown in Figure 1. In the closed position, the cover 2 lies across an upper surface 7 of the main body.

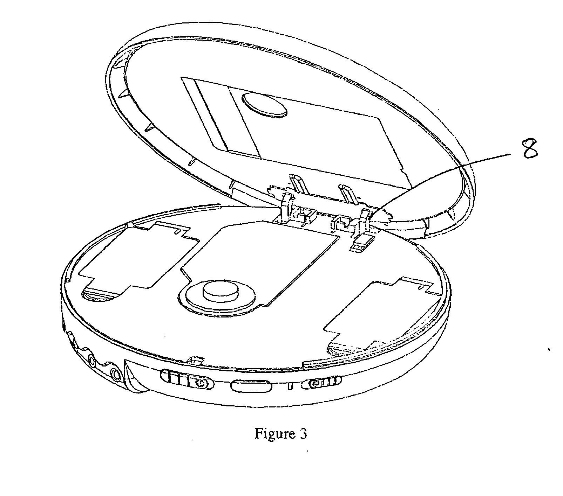

The battery compartments are set inside the main body 1, and comprise two chambers 3-1 and 3-2 opening onto the upper surface 7 of the main body 1 by openings 9. The chambers 3-1 and 3-2 are located on opposite sides of the rotating axle 4. Each compartment may hold 2 AA batteries or rechargeable cells such that these batteries are, in use, disposed completely inside the main body 1. Covering the openings 9 of the two compartments 3-1 and 3-2 are closures 5, each closure being hingedly connected to the main body 1 at one end of the respective compartment so as to be moveable relative to the main body between an open position, as shown in Figure 2, and a closed position, as shown in Figure 3. Each closure 5 is held in the closed position in use by a spring card 5-1 removably wedged in an opening 6 at the other end of each compartment. When the compartment closure 5 is secured in place over the opening 9 as shown in Figure 3, the upper side of the compartment closure 5 is at the same level as the upper surface of the main body 1. Thus, the closure 5 does not interfere with the disks when in use and the compartment closure 5 is less easily damaged than in the arrangements of the prior art in the case of an accidental collision or in case of being dropped.

It is intended to cover by all the appended claims all embodiments and modifications that fall within the scope of the invention.

## Claims

1. A portable DVD player with a built-in battery comprising a main body (1), a cover (2) for said main body (1), at least one battery compartment defined by said main body (1) and a closure (5) for said compartment.

2. A portable DVD player as claimed in claim 1, wherein the cover (2) lies over an upper surface (7) of the main body (1) in use and the at least one battery compartment is accessed by an opening (9) in the upper surface (7) of the main body (1) such that the opening (9) faces the inside of the cover (2).

3. A portable DVD player as claimed in claim 1 or 2, further comprising a viewing screen located in said cover (2) and a hinge (8) for connecting the cover to said main body (1).

4. A portable DVD player as claimed in claim 1, 2 or 3, wherein the main body (1) comprises a rotating axle (4) for receiving a DVD disk, wherein the DVD player comprises two battery compartments located one on either side of the rotating axle (4).

5. A portable DVD player as claimed in any preceding claim, wherein the closure (5) for the battery compartment includes a connection means (5-1) secured thereto for fitting into an opening (6) defined by said main body adjacent the battery compartment, the connection means (5-1) being adapted to resiliently fit into the opening defined by said main body to secure the compartment closure (5) in a closed position relative to the main body (1) to prevent the compartment closure (5) from inadvertently opening.

6. A portable DVD player as claimed in claim 5, wherein the connection means (5-1) comprises of a spring card extending from the end of said closure (5) into said opening (6) when said closure is in the closed position.

7. A portable DVD player as claimed in any of claims 2 to 6, wherein the battery compartment closure (5) is at the same level or lower than the upper surface (7) of the main body (1) so that the battery compartment does not interfere with a DVD disk disposed on the rotating axle.
